# EUROPEAN PATENT SPECIFICATION

(11) **EP 3 904 447 B1**
(45) Date of publication and mention of the grant of the patent: **02.11.2022**
(21) Application number: 20184721.7
(22) Date of filing: 08.07.2020
(51) Int. Cl.: C08L 23/08

(54) **A MULTI-COLOR WOOD-PLASTIC MOLDED MATERIAL, A PROCESS FOR PRODUCING THE SAME AND A WOOD-PLASTIC COMPOSITE BOARD**
MEHRFARBIGES HOLZ-KUNSTSTOFF-FORMMATERIAL, VERFAHREN ZUR HERSTELLUNG DAVON UND HOLZ-KUNSTSTOFF-VERBUNDPLATTE
MATÉRIAU MOULÉ BOIS-PLASTIQUE MULTICOLORE, SON PROCÉDÉ DE PRODUCTION ET PANNEAU COMPOSITE BOIS-PLASTIQUE

(30) Priority: 30.04.2020 WO PCT/CN2020/088116
(43) Date of publication of application: 03.11.2021
(73) Proprietor: Zouping Damei Rubber And Plastic Technology Co., Ltd., 256200 Binzhou Shandong (CN)
(72) Inventor: LIANG, Lei, Binzhou, Shandong 256200 (CN)
(74) Representative: Regimbeau

(56) References cited:
- WO-A2-02/102586
- CN-A- 104 744 955
- CN-A- 106 827 707
- CN-A- 107 418 019
- CN-A- 108 822 567
- US-A1- 2003 021 915

## Description

### Technical field

In general, the present invention relates to a wood-plastic composite. More particularly, the present invention relates to a multi-color wood-plastic molded material, especially a wood-plastic molded material based on polyolefin (for example polyethylene or polypropylene), a process for producing the same, and a wood-plastic composite board comprising the same.

### Background

A wood-plastic composite (WPC), also referred to as wood-plastic material or wood-plastic for simplicity, with superior performances of both wood and plastic has been widely used in a construction field. Depending on working environment and production process, the wood-plastic composite is classified into an indoor decorating material and an outdoor construction material. As an indoor wood-plastic composite, it is generally a lightweight decorating construction material obtained by extrusion molding of polyvinyl chloride as a raw material using a weakly mixing and plasticizing apparatus, such as a single screw extruder or the like. As an outdoor wood-plastic composite, it is generally a high strength and load-bearing construction material manufactured by extrusion of polyethylene or polypropylene as a raw material using a strongly mixing and plasticizing apparatus, such as a parallel twin screw extruder, a conical twin screw extruder or the like, and is for example used for floors, paling boards, fence boards, wall boards, railings, stairs, benches, corridors, pavilions, or the like. The outdoor wood-plastic composite has characteristics of a high mechanical strength, a low water absorption, aging resistance, mildew resistance, or the like, so as to meet requirements for working environment. Due to a low strength, a high water absorption and the like, the indoor lightweight wood-plastic composite of polyvinyl chloride is used less frequently in an outdoor environment, while the outdoor polyolefin-based wood-plastic composite may also be used indoors.

Currently, in the production industry of wood-plastic composites, a wood-plastic composite with an imitation wood texture is mainly manufactured with a post-procedure mechanical surface treatment process or a multi-color co-extrusion process. In the post-procedure mechanical surface treatment process, a plastic skin on a surface of a wood-plastic composite product is removed mechanically, for example, by sanding and polishing with a sander, to reduce a plastic texture, and the surface of the product is rolled with a hot press roller carved with a pattern to form a surface with an imitation wood texture. With respect to the wood-plastic composite with an imitation wood texture as manufactured by the post-procedure mechanical surface treatment process, the imitation wood texture is present only at the surface and the imitation wood texture formed mechanically tends to become lighter with time; and both surface layer and interior of the wood-plastic composite is single in color, imparting a monotone and boring visual effect to the product. In the multi-color co-extrusion process, raw materials for a surface layer and raw materials for a base layer are simultaneously extruded into a tailored co-extruding die by two extruders, i.e. an extruder for a surface layer and an extruder for a base layer, so as to form a wood-plastic molded material having a better imitation wood texture at the surface layer. For the multi-color co-extrusion process, costly apparatus and dies are required to be added and put in service, its process is complex, and its cost is relatively high.

With the development of a construction material market and a wood-plastic composite product market, and with an increasing concern or attention focused on environmental protection and comprehensive utilization of resources, there is an increasingly urgent demand for a wood-plastic molded material having both an excellent performance and a beautiful visual impression.

### Summary

In an aspect, the present invention relates to a multi-color wood-plastic molded material made of a color masterbatch and a base material, wherein a ratio λ of a modulus of elasticity in tension (Et) of the color masterbatch to a modulus of elasticity in tension (Et) of the base material is from 0.26 to 1.47, the modulus of elasticity in tension of the color masterbatch and the modulus of elasticity in tension of the base material are measured at room temperature in accordance with the standard GB/T 1040.2-2006/ISO 527-2: 1993, the base material comprises a plastic and a blend of an organic filler and an inorganic filler, the organic filler comprising a fibre material derived from a plant, and the color masterbatch contains a plastic and a colorant. The modulus of elasticity in tension, abbreviated as Et, is used to characterize and compare elasticity of the color masterbatch and/or the base material and difference therebetween.

In yet another aspect, the present invention relates to a process for producing the multi-color wood-plastic molded material, comprising mixing and melt-extruding the base material and the color masterbatch. The step of mixing and melt-extruding may be carried out at a normal production process temperature for a wood-plastic composite, without the necessity of deliberately increasing the melt extrusion temperature. The term "a normal production process temperature for a wood-plastic composite" (which may be abbreviated hereinafter as a normal process temperature) as used herein refers to a melt extrusion process temperature conventionally used for a mono-color wood-plastic molded material in the art, which is generally 150°C or lower. For example, according to an embodiment of the process for producing a multi-color wood-plastic molded material of the present invention, the base material and the color masterbatch can be extruded at a temperature of about 145°C or lower after molten.

In still yet another aspect, the present invention relates to a wood-plastic composite board product comprising the multi-color wood-plastic molded material, for example a wood-plastic composite floor, a wood-plastic composite paling board, a wood-plastic composite fence board, a wood-plastic composite wallboard or the like.

The present inventor has found that when a color masterbatch and a base material are mixed as a starting material for producing a multi-color wood-plastic composite, the color masterbatch as a thermoplastic elastomer will exhibit a visually observable change in shape during the production of the wood-plastic composite due to a shear and tensile stress applied by a screw of a wood-plastic composite extruder to the color masterbatch in a molten state if an elasticity of the color masterbatch is within a certain range, for example, modulus of elasticity in tension (Et) of the color masterbatch is within a range of 3×10³ MPa or lower. The present inventor has also found via a further study that when a ratio λ of a modulus of elasticity in tension (Et) of the color masterbatch to a modulus of elasticity in tension (Et) of the base material is defined to fall within a range of from 0.26 to 1.47, it is possible to regulate a change in shape of the color masterbatch in the molten state and a degree of compatibility between the color masterbatch and the base material by adjusting the modulus value of elasticity in tension of the color masterbatch within a certain range while using the same base material, so as to obtain a desirable texture and shape of the color masterbatch and a mixed color of a product. Moreover, for the same color masterbatch, its change in shape in the molten state and the degree of compatibility thereof with a base material varies with a modulus of elasticity in tension of the base material. The present inventor has further found that when the ratio of modulus of elasticity in tension of the color masterbatch to the base material extends beyond said specific ratio range, for example, when the ratio of modulus of elasticity in tension of the color masterbatch to the base material is either too large or too small, the resulting wood-plastic molded material will exhibit a mono-color.

In the prior art, it has been proposed to generate a wood texture or flow texture by utilizing differences in melting temperature and viscosity between the prepared color masterbatch and the wood-plastic base material at a temperature higher than the normal process temperature, e.g. at a temperature of from 150°C to 180°C or even higher. In this technical solution, not only energy consumption and cost are increased, but a certain degree of carbonization of a wood flour and a decomposition of a plastic due to aging are also caused, resulting in a degraded quality of a wood-plastic composite product. It has also been proposed to generate a wood texture or flow texture by utilizing difference in melt fluidity between the prepared color masterbatch and the wood-plastic base material through mixing and extruding the color masterbatch and the wood-plastic base material. In this technical solution, the color masterbatch component is generally required to be added in a large amount, which may be 10wt% to 30wt% of the mixture of the color masterbatch and the wood-plastic base material, and the production process temperature is also higher than the normal production process temperature for a wood-plastic composite.

In the products of the prior art, the wood texture or flow texture is generally present in the form of skin at the outer surface of a wood-plastic composite product, resulting in a smooth texture like plastic. If the plastic skin is removed mechanically to enhance a wood texture, an effect in the wood texture or flow texture will be destroyed and even disappear.

Compared to the prior art, the process for producing the multi-color wood-plastic molded material of the present invention possesses notable features. Namely, the multi-color wood-plastic molded material can be produced at the normal production process temperature for a wood-plastic composite with the extrusion temperature being 150°C or lower (for example, from 130°C to 150°C), so that energy consumption and production cost can be controlled and meanwhile product quality can be ensured. The amount of the color masterbatch added is extremely low, and only is 0.1 wt% to 0.5 wt%, preferably 0.15 wt% to 0.3 wt% relative to the mixture of the color masterbatch and the wood-plastic base material. In comparison to an added amount of 10 wt% to 30 wt% of the color masterbatch relative to a mixture of the color masterbatch and the wood-plastic base material in the prior art, the amount of the color masterbatch used is reduced by dozens of times or even hundreds of times in order to obtain a product having an equivalent or better effect, facilitating a reduction in production cost of the multi-color wood-plastic molded material.

These technical effects achievable by the present invention are out of expectation and imagination to a skilled person in the art.

In the process for producing the multi-color wood-plastic molded material of the present invention, it is possible to easily obtain various streaks (patterns) wherein shape of the color masterbatch in the molten state varies and a mixed color wherein the color masterbatch is fused with the base material to different degrees by selecting and adjusting modulus of elasticity in tension of a color masterbatch and a base material in combination, so that various product effects can be conveniently designed and fabricated to satisfy aesthetical requirements and preferences for various customers.

The outer surface of the multi-color wood-plastic molded material of the present invention has two or more colors, each of which can be independently present, or can be partially mixed with each other to exhibit a multi-color texture which is mixed, changes gradually and is similar to texture of a natural wood. Outer surfaces and any one of internal face layers parallel to the outer surface of the multi-color wood-plastic molded material both have color and texture of a natural wood, and therefore, after the outer surface is subjected to a surface treatment process such as polishing or the like, a new surface remains the color and texture of the natural wood. As such, it is an ideal wood-plastic composite product for replacing wood articles.

The process for producing the multi-color wood-plastic molded material of the present invention is well compatible with the prior apparatus for production of a mono-color wood-plastic molded material. No high-cost apparatus or die is required to be added, no modification or adjustment on the production apparatus and process is required, and the process is mature and reliable and is easy to be operated. Therefore, its production cost is lower.

### BRIEF DESCRIPTION OF DRAWINGS

Fig. 1 is a photograph of surface of the wood-plastic molded material obtained in comparative example 13.
Fig. 2 is a photograph of surface of the wood-plastic molded material obtained in comparative example 14.
Fig. 3 is a photograph of surface of the wood-plastic molded material obtained in example 1.
Fig. 4 is a photograph of surface of the wood-plastic molded material obtained in example 2.
Fig. 5 is a photograph of surface of the wood-plastic molded material obtained in example 3.
Fig. 6 is a photograph of surface of the wood-plastic molded material obtained in example 4.
Fig. 7 is a cross-section view of the wood-plastic molded material obtained in example 4.
Fig. 8 is a comparison view of the wood-plastic molded material obtained in example 5 before and after the surface polishing treatment.
Fig. 9 is a photograph of surface of the wood-plastic molded material obtained in example 6.
Fig. 10 is a photograph of surface of the wood-plastic molded material obtained in example 7.
Fig. 11 is a photograph of surface of the wood-plastic molded material obtained in example 8.
Fig. 12 is a photograph of surface of the wood-plastic molded material obtained in example 9.
Fig. 13 is a cross-section view of the wood-plastic molded material obtained in example 9.
Fig. 14 is a photograph of surface of the wood-plastic molded material obtained in example 10.
Fig. 15 is a photograph of surface of the wood-plastic molded material obtained in example 11.
Fig. 16 is a photograph of surface of the wood-plastic molded material obtained in example 12.

### Detailed description

As used herein, singular forms "a", "an" and "the" include plural referents unless otherwise specified in the context clearly. For example, a reference to "a color masterbatch" covers a single color masterbatch, two or more color masterbatch, or the like.

As used herein, the term "for example", "such as", or "comprising" is intended to introduce further illustrative examples of a general concept. Unless otherwise specified, these examples are provided only as an assisting illustration for understanding the applications described in this disclosure, and are not intended to be limiting in any way.

Except in the working example or where otherwise stated, all numbers stated in the description and claims indicating amounts of materials, a temperature, a duration, quantitative properties of materials or the like should be understood as modified in all cases with the wording "about", regardless of whether or not the wording "about" is used in the expression.

It should be understood that any numerical range as recited herein includes any sub-ranges within the range and any combination of endpoints of the range or the sub-ranges, as described in the example or elsewhere in the description.

It should also be understood here that any component of the present invention as described in this description by any particular general concept or specific concept detailed in the example section can be used in an embodiment as alternative corresponding definitions of any endpoints of ranges for this component as described elsewhere in the description, and can therefore be used in a non-limiting embodiment to replace such endpoints of ranges described elsewhere.

It should also be understood that any compound, material or substance as explicitly or implicitly disclosed in the description and/or mentioned in the claims as belonging to a group of compounds, materials or substances that are related in structure, composition and/or function comprises a single representative within the group and all of combinations thereof.

The terms or words used in the description and claims should not be strictly interpreted as having general meanings or meanings in dictionaries, but should be interpreted as having the meanings and concepts that conform to the inventive concept based on the following principle: the inventors can appropriately define a term to allow them to explain their own invention in the best way.

As used herein, the term "multi-color" refers to the presence of two or more colors, each of which can exist independently and/or can be partially mixed with each other to form a compound color. When the "multi-color" is used with reference to a product, it means that at least outer surface of the product exhibits two or more colors, each of which can exist independently and/or can be partially mixed with each other. Further, for example, the outer surfaces and at least a part, preferably all, of face layers parallel to the outer surfaces of the product exhibit two or more colors. In one embodiment, the colors, for example those of the base material and the color masterbatch, each exist independently. In another embodiment, the colors, for example those of the base material and the color masterbatch, are partially mixed with each other to form a compound color. In yet another embodiment, the colors, for example those of the base material and the color masterbatch, exhibit a compound color effect in which two or more colors are mixed and vary gradually.

As used herein, the term "wood-plastic molded material" refers to a wood-plastic composite molded by heating and melting. Raw and auxiliary materials of the wood-plastic composite and molding methods thereof are well known in the art. Examples of the molding methods include but are not limited to extrusion. The wood-plastic composite also includes a lightweight wood-plastic product with a lower density prepared by adding a foaming agent.

As used herein, the term "base material" refers to a base material that exists as a continuous phase in a molten state during the production of the wood-plastic molded material. The base material comprises a plastic (for example, a thermoplastic resin) and a filler, and further optionally comprises a colorant and an auxiliary agent including a foaming agent.

As used herein, the term "color masterbatch" refers to a colorant masterbatch that exists as a dispersed phase in a molten state during the production of the wood-plastic molded material. The color masterbatch comprises a plastic (for example, a thermoplastic resin) and a colorant, and further optionally comprises an auxiliary agent.

In the present invention, the module of elasticity in tension is measured at room temperature in accordance with the standard GB/T 1040.2-2006/ISO 527-2: 1993 using a testing equipment, such as a servo-controlled tensile testing machine or the like. Index of the modulus of elasticity in tension is used to characterize or compare elasticity performance of the color masterbatch and/or the base material.

In one aspect, the present invention relates to a multi-color wood-plastic molded material made of a color masterbatch and a base material, wherein a ratio λ of a modulus of elasticity in tension (Et) of the color masterbatch to a modulus of elasticity in tension (Et) of the base material is from 0.26 to 1.47. When two or more kinds of color masterbatch are used, a ratio λ of modulus of elasticity in tension (Et) of each of the color masterbatch to modulus of elasticity in tension (Et) of the base material, i.e., a ratio of the color masterbatch to the base material, is about 0.26 to 1.47.

The color masterbatch of the multi-color wood-plastic molded material according to the present invention contains a plastic and a colorant, and optionally contains a filler and an auxiliary agent. Examples of the auxiliary agent include but are not limited to an antioxidant, a light stabilizer, a coupling agent, a lubricant, a dispersant, and a compatibilizer. The auxiliary agent can be used alone or in combination. In one embodiment, the color masterbatch of the multi-color wood-plastic molded material is substantially consisted of a plastic and a colorant. In another embodiment, the color masterbatch of the multi-color wood-plastic molded material is substantially consisted of a plastic, a colorant and a filler. Here, " substantially consisted of " means that the weight percentage of the listed components is about 60% or more, specifically about 70% or more, more specifically about 80% or more, and in one embodiment about 90% or more or even about 95% or more.

The plastic used in the color masterbatch is not particularly limited, as long as the ratio λ of modulus of elasticity in tension (Et) of the color masterbatch to modulus of elasticity in tension (Et) of the base material falls within the range of from about 0.26 to about 1.47. In one embodiment, the plastic in the color masterbatch is a thermoplastic resin, especially a polyolefin-based resin. Preferably, the polyolefin-based resin is polyethylene, polypropylene or a combination thereof. Examples of the polyethylene include but are not limited to a low density polyethylene, a high density polyethylene, and a blend thereof. The polyethylene may comprise modified polyethylene, for example graft-modified or blend-modified polyethylene, wherein a modifier used may be at least one selected from the group consisting of conventional modifiers, such as Nylon 6, Nylon 66 or the like. The polypropylene comprises unmodified polypropylene and modified polypropylene. The modified polypropylene comprises graft-modified polypropylene and blend-modified polypropylene. In a preferred embodiment, the color masterbatch comprises, as a plastic component, only one type of polyethylene (for example one type of a low density polyethylene or one type of a high density polyethylene) or only one type of polypropylene, avoiding a complex process due to compounding of a blend (a plastic alloy) of two or more plastics, and therefore further reducing manufacturing cost of the product.

The colorant as used in the color masterbatch is not particularly limited, and it can be specifically selected according to a coloring effect desired to be achieved, as long as the ratio λ of modulus of elasticity in tension (Et) of the color masterbatch to modulus of elasticity in tension (Et) of the base material falls within a range of from about 0.26 to about 1.47. The colorant comprises an inorganic pigment and/or an organic pigment and/or a metallic pigment. Examples of the inorganic pigment comprise but are not limited to one of or a mixture of several of titanium dioxide, iron oxide red, iron oxide yellow, iron oxide brown, iron oxide blue, chrome oxide green, carbon black, and white carbon black. Examples of the metallic pigment comprise but are not limited to copper powder, bronze powder (copper-zinc alloy powder), silver powder (aluminum powder) or the like. Examples of the organic pigment comprise but are not limited to one of or a mixture of several of an azo pigment, a heterocyclic pigment, and a miscellaneous pigment. In an embodiment, the pigment is selected from the group consisting of carbon black and iron oxide red. In an embodiment, based on 100 parts by weight of total weight of the color masterbatch, the content of the pigment is from about 20 parts by weight to about 50 parts by weight, and preferably is about 20 parts by weight to about 40 parts by weight.

The filler used in the color masterbatch is not particularly limited, as long as the ratio λ of modulus of elasticity in tension (Et) of the color masterbatch to modulus of elasticity in tension (Et) of the base material falls within a range of from about 0.26 to about 1.47. The filler comprises an inorganic filler and/or an organic filler. The organic filler generally refers to a fibre material derived from a plant, and examples thereof comprise but are not limited to one of or a mixture of several of wood flour, sawdust, rice husk, bamboo flour, and hemp. Examples of the inorganic filler comprise but are not limited to one of or a mixture of several of light calcium carbonate (Calcium carbonate), talc, silica, kaolin, mica, calcium silicate, glass fiber, and fly ash. Preferably, the filler is an inorganic filler, and especially preferably is light calcium carbonate. In an embodiment, based on 100 parts by weight of total weight of the color masterbatch, an amount of the filler used is from 0 to about 35 parts by weight, and for example is from about 5 parts by weight to about 30 parts by weight. If the filler and especially the inorganic filler is used, based on a total weight of the color masterbatch, a total weight of the pigment and the filler is greater than about 35wt%, is preferably about 40wt% or greater, and is preferably about 65wt% or lower. When the total weight of them is within such a range, it can be easy to adjust the ratio λ of modulus of elasticity in tension (Et) of the color masterbatch to modulus of elasticity in tension (Et) of the base material to be within a range of from about 0.26 to about 1.47.

An antioxidant, a light stabilizer, a coupling agent, a lubricant, a dispersant, and a compatibilizer used as auxiliary agents in the color masterbatch are those commonly used in the wood-plastic composite. Examples of the antioxidant comprise but are not limited to phosphite-based and hindered phenol-based antioxidants. Examples of the light stabilizer comprise but are not limited to benzophenone-based and benzotriazole-based light stabilizers. Examples of the coupling agent comprise but are not limited to titanate-based and silane-based coupling agents. Examples of the lubricant comprise but are not limited to lubricants of a metal soap, a fatty acid and salt thereof, and a fatty acid amide. Examples of the dispersant comprise but are not limited to dispersants of fatty acid ester and fatty alcohol. Examples of the compatibilizer comprise but are not limited to maleic acid modified polyolefin-based compatibilizer.

In an embodiment, the color masterbatch comprises or consists of: about 30 to about 60 parts by weight of polyethylene or polypropylene, about 20 to about 50 parts by weight of a colorant, especially an inorganic pigment or a metallic pigment, 0 to about 30 parts by weight of an inorganic filler, and 0 to about 5 parts by weight of an auxiliary agent selected from the group consisting of an antioxidant, a light stabilizer, a coupling agent, a lubricant, a dispersant and a compatibilizer, based on 100 parts by weight of a total weight of the color masterbatch. Preferably, the total weight of polyethylene or polypropylene and the inorganic pigment or metallic pigment constitutes 60 parts by weight to 99.9 parts by weight, particularly about 70 parts by weight to about 98 parts by weight, and more particularly about 75 parts by weight to about 97 parts by weight, of a total weight of the color masterbatch. Preferably, the total weight of the inorganic pigment or metallic pigment and the inorganic filler constitutes 30 parts by weight to 75 parts by weight, particularly about 35 parts by weight to about 70 parts by weight, and more particularly about 40 parts by weight to about 65 parts by weight, of the color masterbatch. When the color masterbatch has a composition within the above-mentioned ranges, it can be easy to adjust the ratio λ of modulus of elasticity in tension (Et) of the color masterbatch to modulus of elasticity in tension (Et) of the base material (especially, the base material based on a recycled material, for example a recycled polyethylene material) to be within a range of from about 0.26 to about 1.47, and the color masterbatch added may be used in a low amount (for example, from 0.1wt% to 0.5wt%, based on a total weight of the color masterbatch and the base material), to further reduce production cost.

The base material of the multi-color wood-plastic molded material according to the present invention comprises a plastic and a filler, and optionally further comprises a colorant and an auxiliary agent. Examples of the auxiliary agent comprise but are not limited to an antioxidant, light stabilizer, coupling agent, lubricant, dispersant, compatibilizer, a flame retardant, a mildew inhibitor, and a foaming agent. The auxiliary agent can be used alone or in combination.

The plastic used in the base material is not particularly limited, as long as the ratio λ of modulus of elasticity in tension (Et) of the color masterbatch to modulus of elasticity in tension (Et) of the base material falls within a range of from about 0.26 to about 1.47. In an embodiment, the plastic in the base material is a thermoplastic resin, especially a polyolefin based resin. Preferably, the polyolefin based resin comprises polyethylene, polypropylene or combination thereof. Examples of polyethylene comprise but are not limited to low density polyethylene, high density polyethylene, and a blend thereof. Polyethylene may comprise recycled polyethylene. In a preferable embodiment, only recycled polyethylene (for example, recycled high density polyethylene, recycled low density polyethylene, or a mixture thereof) is used as the plastic component in the base material, which further reduces production cost of a product. In an embodiment, the base material comprises about 20 to about 60 parts by weight of a polyolefin based resin, particularly about 25 to about 50 parts by weight of the resin, and more particularly about 25 to about 40 parts by weight of the resin, based on 100 parts by weight of the total weight of the base material.

The filler used in the base material is not particularly limited, as long as ratio λ of modulus of elasticity in tension (Et) of the color masterbatch to modulus of elasticity in tension (Et) of the base material falls within a range of from about 0.26 to about 1.47, and the filler comprises a blend of an organic filler and an inorganic filler. Examples of the organic filler comprise but are not limited to one of or a mixture of several of wood flour, sawdust, rice husk, bamboo flour, and hemp. Examples of the inorganic filler comprise but are not limited to one of or a mixture of several of light calcium carbonate, talc, silica, kaolin, mica, calcium silicate, glass fibre, and fly ash. In a preferable embodiment, the blend of the organic filler and inorganic filler constitutes about 50 wt% or greater or about 60 wt% or greater of the base material. In a further preferable embodiment, the organic filler constitutes about 40 wt% or greater or about 50 wt% or greater of the base material.

The colorant used in the base material is not particularly limited, and it can be specifically selected according to coloring effect desirable to be achieved and the colorant in the color masterbatch. The colorant used in the base material comprises an inorganic pigment and/or an organic pigment. Examples of the inorganic pigment comprise but are not limited to one of or a mixture of several of titanium dioxide, iron oxide red, iron oxide yellow, iron oxide brown, iron oxide blue, chrome oxide green, carbon black, and white carbon black. The organic pigment comprises one of or a mixture of several of an azo pigment, a heterocyclic pigment, and a miscellaneous pigment. In an embodiment, the colorant is an inorganic pigment selected from the group consisting of titanium dioxide, iron oxide red and iron oxide yellow. In an embodiment, based on 100 parts by weight of the total weight of the base material, the content of the colorant is about 10 parts by weight or lower or about 5 parts by weight or lower, or even no colorant is contained. In a preferable embodiment, the content of the colorant is about 2 parts by weight to about 4 parts by weight.

An antioxidant, a light stabilizer, a coupling agent, a lubricant, a dispersant, a compatibilizer, a flame retardant, a mildew inhibitor, and a foaming agent used as auxiliary agents in the base material are those commonly used in the wood-plastic composite. Specific examples thereof comprise but are not limited to those as described above with respect to the auxiliary agents for the color masterbatch.

In embodiments of the present invention, the ratio λ of modulus of elasticity in tension (Et) of the color masterbatch to modulus of elasticity in tension (Et) of the base material falls within a range of from about 0.26 to about 1.47. The inventors of our invention unexpectedly found that, it is possible to obtain a multi-color wood-plastic molded material having a texture that is similar to texture of wood both at outer surfaces and at each of face layers parallel to the outer surfaces by selecting and controlling the ratio of modulus of elasticity in tension (Et) of the color masterbatch to modulus of elasticity in tension (Et) of the base material within a certain numerical range. By means of comparisons via extensive experimentations by selecting and changing the color masterbatch having varying elasticity properties, i.e. the color masterbatch having different modulus of elasticity in tension, under the same conditions of the base material, the apparatus, the process or the like, the inventor of the invention has discovered that the rheological form of the melted color masterbatch in the base material changes in shape from spots to folded lines, to rods, to wide streaks, to thin streaks, and to a diffused state when the ratio λ of modulus of elasticity in tension (Et) decreases gradually within the above-mentioned range as the modulus of elasticity in tension of the color masterbatch decreases. When λ equals to 1.68, the color masterbatch is in the form of tiny dots and the molded material exhibits a single color of the base material. And when λ equals to 0.20, the color masterbatch is totally melted and the molded material exhibits a mixed single color of masterbatch with base material. In an embodiment, the ratio λ of modulus of elasticity in tension (Et) of the color masterbatch to modulus of elasticity in tension (Et) of the base material falls within a range of about 0.70 to about 1.47, and in the resulting wood-plastic molded material, the base material and the color masterbatch independently exist to exhibit their respective colors. In another embodiment, the ratio λ of modulus of elasticity in tension (Et) of the color masterbatch to modulus of elasticity in tension (Et) of the base material falls within a range of about 0.26 or greater but smaller than about 0.70, particularly about 0.69, more particularly about 0.68, or even more particularly about 0.67, so that in the resulting wood-plastic molded material, the base material and the color masterbatch are present in a state of being at least partially fused, and therefore, said wood-plastic molded material exhibits the compound color effect wherein the colors of the base material and the color masterbatch are mixed and change gradually.

In an embodiment, the modulus of elasticity in tension (Et) of the color masterbatch as measured in accordance with the standard GB/T 1040.2-2006/ISO 527-2: 1993 is within a range of from about 0.1 ×10³ MPa to about 3×10³ MPa. For example, the modulus of elasticity in tension (Et) of the color masterbatch is within a range of from about 0.2 ×10³MPa to about 3 ×10³MPa and preferably within a range of about 0.5 ×10³ MPa to about 2.5 ×10³MPa, and specifically may be for example about 2.42×10³MPa, about 2.11 ×10³ MPa, about 1.92 ×10³ MPa, about 1.80 ×10³ MPa, about 1.66 ×10³ MPa, about 1.55 ×10³ MPa, about 1.45 ×10³ MPa, about 1.24 ×10³ MPa, about 1.12 ×10³ MPa, or about 0.86 ×10³ MPa.

In a preferable embodiment, the color masterbatch in the base material is in a molten form of a clear and typically elongated streak, and upon a polishing treatment, the same clear and elongated streak as that of the surface layer is present in any interior plane parallel to the surface layer. The molded material has mainly two colors, i.e. a background color of the base material and black streaks on surfaces, and also has a bit of mixed color of the two colors. In another preferable embodiment, the base material is the same but a different color masterbatch is selected to be used, and the color masterbatch in the base material is in a molten form of relatively wide streaks with lines or spots having the same color as the color masterbatch present on the cross-section perpendicular to the surface of the wood-plastic molded material. In another preferable embodiment, the color masterbatch in the base material is in a molten form of clear bar-shape, and there are only two colors, i.e. a background color of the base material and black streaks, on the surfaces of the molded material. In another preferable embodiment, the color masterbatch in the base material exhibits a molten form of diffusive and cloudy shape, and there are a background color of the base material, a black color of the color masterbatch, and a mixed color varying in shade and changing gradually on surfaces of the molded material.

In yet another embodiment, by using, in combination, two or more kinds of color masterbatch, each of which satisfies the ratio λ of modulus of elasticity in tension (Et) of the color masterbatch to modulus of elasticity in tension (Et) of the base material being from about 0.26 to about 1.47, streaks of each of these kinds of color masterbatch are present both on the outer surfaces and on each of face layers parallel to the outer surfaces in the resulting wood-plastic molded material. In one example, the base material is white, and the color masterbatch comprises a black masterbatch and a brown masterbatch, so that there are black and brown streaks on the surfaces of the resulting wood-plastic molded material.

In another aspect, the present invention relates to a process for producing a multi-color wood-plastic molded material, comprising mixing and melt-extruding a base material and a color masterbatch. In an embodiment, prior to mixing and melt-extruding of the base material and the color masterbatch, the process may further comprise: measuring modulus of elasticity in tension of the base material; and, according to the measured modulus of elasticity in tension of the base material, selecting a suitable color masterbatch, so that a ratio λ of modulus of elasticity in tension (Et) of the color masterbatch to modulus of elasticity in tension (Et) of the base material falls within a range from 0.26 to 1.47. In accordance with the process of the present invention for producing a multi-color wood-plastic molded material, it is possible to select a color masterbatch suitable for a low cost base material according to various streaks of the wood-plastic molded materials desirable to consumers, and thereby it is possible to conveniently design and produce products having various effects to meet various aesthetic expectation and preference of the consumers.

The wood-plastic molded material obtained by the mixing and melt-extruding may optionally undergo one or more of the following operations: cooling, cutting, and surface treatment. Examples of the surface treatment comprise but are not limited to polishing, wiredrawing, embossing, a surface treatment conducted with a surface treatment agent, for example, a finish paint, and the like.

The base material and the color masterbatch may either be mixed prior to the melting and extrusion operation, or may be mixed in the course of the melting and extrusion. In an embodiment, the production process may comprise feeding into an extruder an predetermined proportion of the color masterbatch and base material after stirred uniformly with a stirrer, and then performing a continuous melt extrusion with an extruder to form a multi-color wood-plastic molded material. In another embodiment, the production process comprises feeding into an extruder the base material and the color masterbatch simultaneously but separately to achieve mixing with shear stirring via screws of the extruder, and then, performing a continuous melt extrusion with the extruder to form a multi-color wood-plastic molded material. In this embodiment, the proportion of the color masterbatch to the base material can be adjusted with rotation speed of the feeding mechanisms. The extruder may be a conventional extruder commonly used in processing thermoplastic resins. Examples of the extruder comprise but are not limited to a single screw extruder, a twin screw extruder and a multi-screw extruder. Temperature in each of cylinders (zones) of the extruder and rotation speed of the screw can be appropriately determined according to materials to be extruded. In accordance with the process of the present invention for producing a multi-color wood-plastic molded material, it is possible to allow the temperature in each of cylinders (zones) of the extruder to be 150°Cor lower. For example, it is possible to allow temperatures of confluence core and die in plasticizing extrusion cylinders (zones) to be even controlled at 145°C or lower. By producing a multi-color wood-plastic molded material at such a normal production process temperature for a wood-plastic composite, it is possible to enable a stable product quality and a low cost of energy consumption.

The color masterbatch and the base material can be produced using a process known in the art. For example, they may be prepared by a process comprising: adding a plastic, a pigment, and optionally an auxiliary agent in a proportion into a high speed mixer to obtain an uniform mixing, then melting and extruding the resulting mixture with an extruder for example a twin screw extruder, and subjecting the extruded product to cooling, pelletizing, centrifugal dehydration, and air drying.

In yet another aspect, the present invention relates to a product comprising the multi-color wood-plastic molded material, for example, a paving, railings, stairs, benches, corridors, gazebos, or the like. Preferably, the product is a wood-plastic composite board, for example a wood-plastic composite floor, a wood-plastic composite paling board, a wood-plastic composite fence board, a wood-plastic composite wallboard, or the like.

### Example

The present invention will be more particularly illustrated with reference to examples, but these example should not be construed as limiting the scope of the present invention. Moreover, in the following description, unless otherwise specified, "part(s)" means "part(s) by weight", and "%" means "wt%".

Materials used in each of examples are presented in Table 1 as below.

**Table 1: Summary of information on materials**

| name | manufacturer | remarks |
|---|---|---|
| PE 2480 | Qilu Branch of China Petroleum & Chemical Corporation | high density polyethylene |
| PE 7042 | Qilu Branch of China Petroleum & Chemical Corporation | low density polyethylene |
| PP R200P | Korea Hyosung Group | polypropylene |
| recycled PE material | Jieshou city Zezhen Plasticizing Co., Ltd. | a mixture of high density polyethylene with low density polyethylene |
| carbon black | Jiangxi black cat carbon black Co., Ltd. | Trademark N220 |
| iron oxide red | Zhejiang Huayuan Pigment Co., Ltd. | Model 180 |
| iron oxide yellow | Zhejiang Huayuan Pigment Co., Ltd. | Model 586 |
| titanium white | Jinan Yuxing Chemical Co., Ltd. | Model R818 |
| light calcium carbonate | Shandong Zibo Jianzhi Industry & Trade Co., Ltd. | Fineness of 400 meshes |
| wood flour | Nanchang Phaeton Wood flour Co., Ltd. | Fineness of 60 to 80 meshes |
| major antioxidant | BASF, Germany | Model Irganox1010 |
| auxiliary antioxidant | BASF, Germany | Model Irgafos168 |
| light stabilizer | Cytec, America | Model CYASORB UV-531 |
| titanate coupling agent | Kenrich Petrochemical Company, America | Model KR-9 |
| complex lubricant | STRUKTOL Company, America | Model 604 |
| complex antioxidant | BASF, Germany | a 1:1 mixture of major antioxidant with auxiliary antioxidant |
| compatibilizer | Huangshan Benoy Technology Co., Ltd. | maleated polyethylene SZ11 |

### Preparation Example of color masterbatch

Into a high speed mixer SHR-300A, the plastic, the pigment, and the auxiliary agent as presented in Table 2 were charged in the weight percentages as shown, and were stirred at a rotation speed of 1480 rpm for 10 min. The resulting mixture material was charged into the parallel co-rotating twin screw extruder AK-73 (available from Nanjing Keya Chemical Equipment Co., Ltd.), and was subjected to melt extrusion and granulation to obtain each of color masterbatch: black color masterbatch Nos. H1-1 to H3-1, and brown color masterbatch Nos. Z1-1 and Z1-2. Conditions of the melt extrusion were as follows: screw length-diameter ratio L/D =44, screw rotation speed of 600 rpm, temperatures of Zones 1 to 11 of the extruder set at 100°C, 110°C, 120°C, 130°C, 140°C, 150°C, 160°C, 170°C, 170°C, 180°C, and 190°C, respectively, and a melt temperature of 190°C.

Modulus of elasticity in tension of each of the color masterbatch was measured using the servo controlled tensile testing machine AI-7000 to M1 (available from High Speed Rail Testing Instruments (Dongguan) Co., Ltd.), and results were presented in Table 2.

### Preparation Example of base material

Into the high speed mixer SHR-300A, the recycled PE material, the pigment, and the auxiliary agent as presented in Table 3 was charged in the weight percentages as shown, and were stirred at a rotation speed of 1480 rpm for 10 min. The resulting mixture material was charged into the parallel co-rotating twin screw extruder AK-73 (available from Nanjing Keya Chemical Equipment Co., Ltd.), and was subjected to melt extrusion and granulation to obtain each of the base materials. Conditions of the melt extrusion were as follows: screw length-diameter ratio L/D=44, screw rotation speed of 600rpm, temperatures of zones 1-11 of the extruder set at 100°C, 110°C, 120°C, 130°C, 140°C, 150°C, 160°C, 170°C, 170°C, 180°C, and 190°C, respectively, and melt temperature of 190°C.

Modulus of elasticity in tension of each of the base materials was measured using the servo controlled tensile testing machineAI-7000 to M1 (available from High Speed Rail Testing Instruments (Dongguan) Co., Ltd.), and results were presented in Table 3.

**Table 2 Formulation and modulus of elasticity in tension Et of color masterbatch**

| color masterbatch No. | Et MPa | Plastic | | Colorant | | Auxiliary agents | | | | | | | | | |
|---|---|---|---|---|---|---|---|---|---|---|---|---|---|---|---|
| | | kind | wt% | kind | wt% | Kind | wt% | kind | wt% | kind | wt% | kind | wt% | kind | wt% |
| H1-1 | 1.24 ×10³ | PE2480 | 60 | carbon black | 20 | light calcium carbonate | 17 | major antioxidant | 0.5 | auxiliary antioxidant | 1 | light stabilizer | 0.5 | titanate coupling agent | 1 |
| H1-2 | 1.45 ×10³ | | 54 | | 26 | | 17 | | 0.5 | | 1 | | 0.5 | | 1 |
| H1-3 | 1.66 ×10³ | | 50 | | 26 | | 21 | | 0.5 | | 1 | | 0.5 | | 1 |
| H1-4 | 1.80 ×10³ | | 46 | | 26 | | 25 | | 0.5 | | 1 | | 0.5 | | 1 |
| H1-5 | 2.11 ×10³ | | 42 | | 28 | | 27 | | 0.5 | | 1 | | 0.5 | | 1 |
| H1-6 | 2.42 ×10³ | | 36 | | 36 | | 25 | | 0.5 | | 1 | | 0.5 | | 1 |
| H2-1 | 1.55 ×10³ | PE 7042 | 47 | | 50 | | 0 | | 0.5 | | 1 | | 0.5 | | 1 |
| H3-1 | 1.92×10³ | PP R200P | 42 | | 28 | | 27 | | 0.5 | | 1 | | 0.5 | | 1 |
| Z1-1 | 0.86 ×10³ | PE2480 | 50 | iron oxide red | 40 | | 8 | | 0.5 | | 1 | | 0.5 | | 0 |
| Z1-2 | 1.12 ×10³ | | 40 | | 40 | | 18 | | 0.5 | | 1 | | 0.5 | | 0 |

**Table 3 Formulation and modulus of elasticity in tension Et of base material**

| base material No. | Et (MPa) | recycled PE material | filler | | | | colorant | | auxiliary agents | | | | | |
|---|---|---|---|---|---|---|---|---|---|---|---|---|---|---|
| | | wt% | kind | wt% | kind | wt% | kind | wt% | kind | wt% | kind | wt% | kind | wt% |
| WPC1-1 | 4.26 ×10³ | 26 | wood flour | 53 | light calcium carbonate | 10 | iron oxide yellow | 3 | complex lubricant | 3 | complex antioxidant | 2 | compatibilizer | 3 |
| WPC1-2 | 3.56 ×10³ | 30 | | 49 | | 10 | iron oxide red | 3 | | 3 | | 2 | | 3 |
| WPC1-3 | 3.01 ×10³ | 26 | | 52 | | 12 | titanium white | 3 | | 2.5 | | 2 | | 2.5 |
| WPC1-4 | 2.85 ×10³ | 26 | | 50 | | 13 | iron oxide red | 3 | | 3 | | 2 | | 3 |
| WPC1-5 | 1.44 ×10³ | 38 | | 41 | | 10 | titanium white | 3 | | 3 | | 2 | | 3 |
| WPC2-1 | 3.46 ×10³ | 40 | | 34 | | 14 | titanium white | 3 | | 4 | | 2 | | 3 |

### Examples 1-12 and Comparative Examples 13-14

Into the counter-rotating conical twin screw extruder of Model SJZ65/132 (available from Shanghai Jinwei Machinery Manufacturing Co., Ltd.), each base material and each color masterbatch in each of all Examples except Example 9 and all Comparative Examples were charged in the combinations and used amounts as shown in Table 4, and were subjected to melt extrusion to obtain a wood-plastic molded material. Conditions of the melt extrusion were as follows: screw rotation speed of 34.7 rpm; temperatures of the extruder: 150°C for Zone 1, 150 °Cfor Zone 2, 140°C for Zone 3, 140°C for Zone 4; temperature of confluence core of 140°C; temperatures of dies: 140°C, 140°C, 140°C, and 140°C. Ratios λ of modulus of elasticity in tension of each of the color masterbatch to modulus of elasticity in tension of the wood-plastic base material were also presented in Table 4. The proportions of the color masterbatch added were as follows: 0.5% for Example 1, 0.5% for Example 2, 0.1% for Example 3, 0.25% for Examples 4 to 7 and 9, 0.3% for Examples 8 and 10, 0.3% of the brown color masterbatch and 0.1% of black color masterbatch for Example 11, 0.25% for Example 12, and 0.25% for Comparative Example 13 and Comparative Example 14.

In addition, Example 9 is different from the above in that a co-extrusion process in which two extruders worked simultaneously was used. In this Example 9, materials of a core layer having a formulation comprising the following were extruded using the counter-rotating conical twin screw extruder of Model SJZ65/132 under the same conditions as above to form the core layer of the wood-plastic molded material: 25% of recycled PE material, 60% of wood flour, 10% of light calcium carbonate, 2% of the complex lubricant, 2.5% of the compatibilizer, and 0.5% of the auxiliary antioxidant. In the meanwhile, the color masterbatch and the base material of Example 9 as presented in Table 4 were mixed into a material for a surface layer, which was formed into a co-extrusion face layer on the surface of materials of the core layer with the single screw extruder of Model SJ20 at a screw rotation speed of 20 rpm. Temperatures of the co-extrusion dies (available from Huangshi High-tech Plastic Die Co., Ltd.) were: 140°C, 140°C, 140°C, and 140°C.

Afterwards, surfaces of the extruded products obtained in all of Examples and Comparative Examples were subjected to a surface treatment of removing mechanically plastic skin on the surface. In addition, surfaces of the products obtained in Example 1, Example 3, Example 7, Example 8, Comparative Example 13, and Comparative Example 14 were further subjected to hot-embossing mechanical treatment.

**Table 4 Formulations of wood-plastic molded materials and ratios (λ) of modulus of elasticity in tension Et of color masterbatch to modulus of elasticity in tension Et of base material**

| Example Nos. | color masterbatch | | | base material | | ratio λ of Et |
|---|---|---|---|---|---|---|
| | Nos. | addition proportion | modulus of elasticity in tension Et | Nos. | modulus of elasticity in tension Et | |
| Example 1 | H1-5 | 0.5% | 2.11×10³ | WPC1-5 | 1.44×10³ | 1.47 |
| Example 2 | H3-1 | 0.5% | 1.92 ×10³ | WPC1-5 | 1.44×10³ | 1.33 |
| Example 3 | H1-5 | 0.1% | 2.11×10³ | WPC1-3 | 3.01 ×10³ | 0.70 |
| Example 4 | H1-4 | 0.25% | 1.80 ×10³ | WPC1-4 | 2.85 ×10³ | 0.63 |
| Example 5 | H1-3 | 0.25% | 1.66 ×10³ | WPC1-4 | 2.85 ×10³ | 0.58 |
| Example 6 | H1-2 | 0.25% | 1.45 ×10³ | WPC1-4 | 2.85 ×10³ | 0.51 |
| Example 7 | H1-1 | 0.25% | 1.24 ×10³ | WPC1-4 | 2.85 ×10³ | 0.44 |
| Example 8 | H3-1 | 0.3% | 1.92 ×10³ | WPC1-4 | 2.85 ×10³ | 0.67 |
| Example 9 | H2-1 | 0.25% | 1.55 ×10³ | WPC2-1 | 3.46 ×10³ | 0.45 |
| Example 10 | Z1-2 | 0.3% | 1.12 ×10³ | WPC1-1 | 4.26 ×10³ | 0.26 |
| Example 11 | Z1-2 | 0.3% | 1.12 ×10³ | WPC1-3 | 3.01 ×10³ | 0.37 |
| | H1-2 | 0.1% | 1.45 ×10³ | | | 0.48 |
| Example 12 | Z1-1 | 0.25% | 0.86 ×10³ | WPC1-3 | 3.01×10³ | 0.29 |
| Comparative Example 13 | H1-6 | 0.25% | 2.42 ×10³ | WPC1-5 | 1.44×10³ | 1.68 |
| Comparative Example 14 | Z1-1 | 0.25% | 0.86 ×10³ | WPC1-1 | 4.26×10³ | 0.20 |

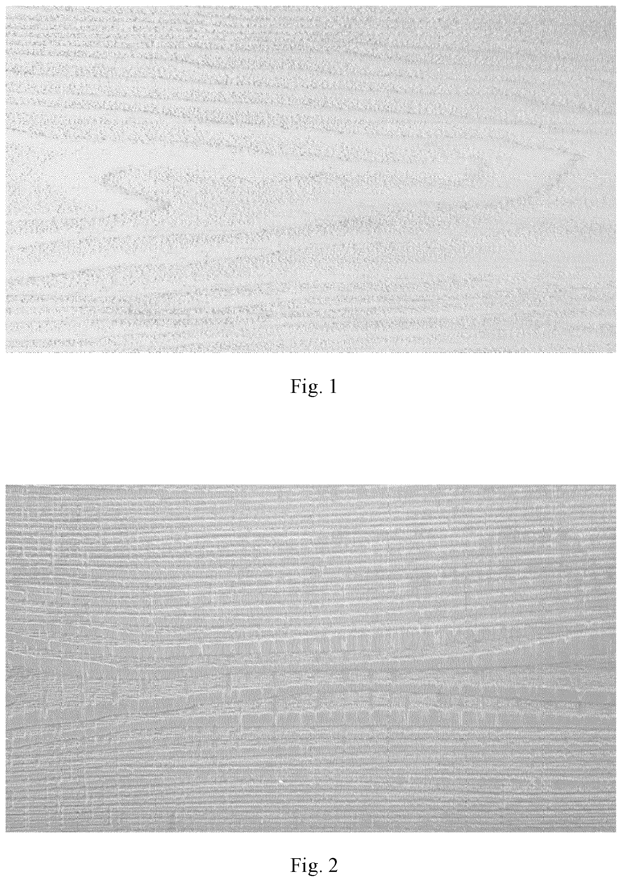

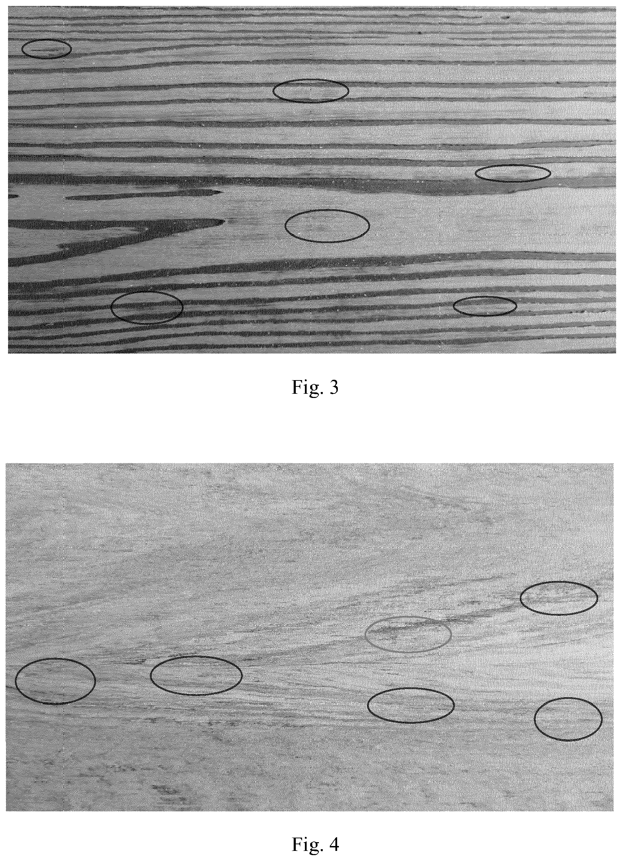

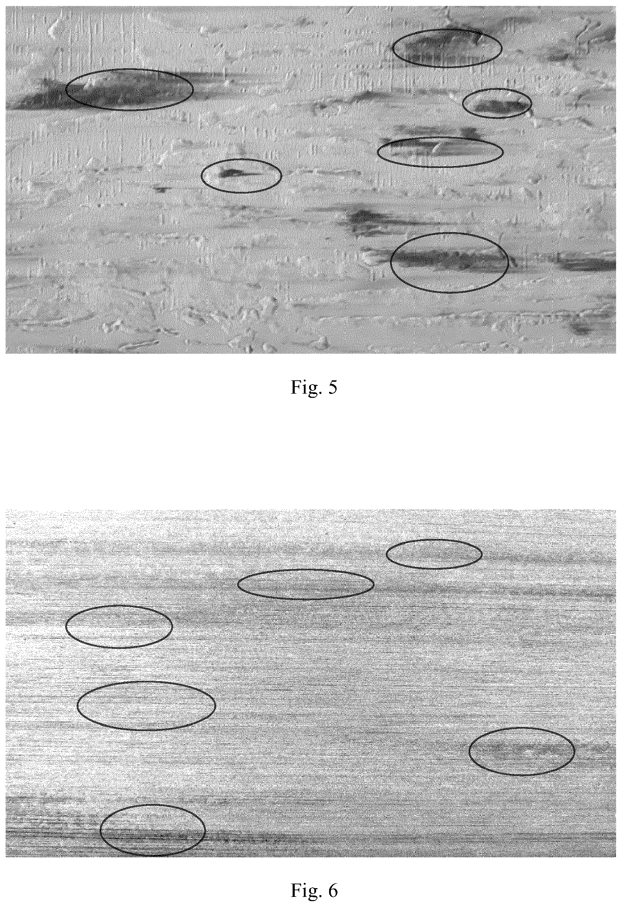

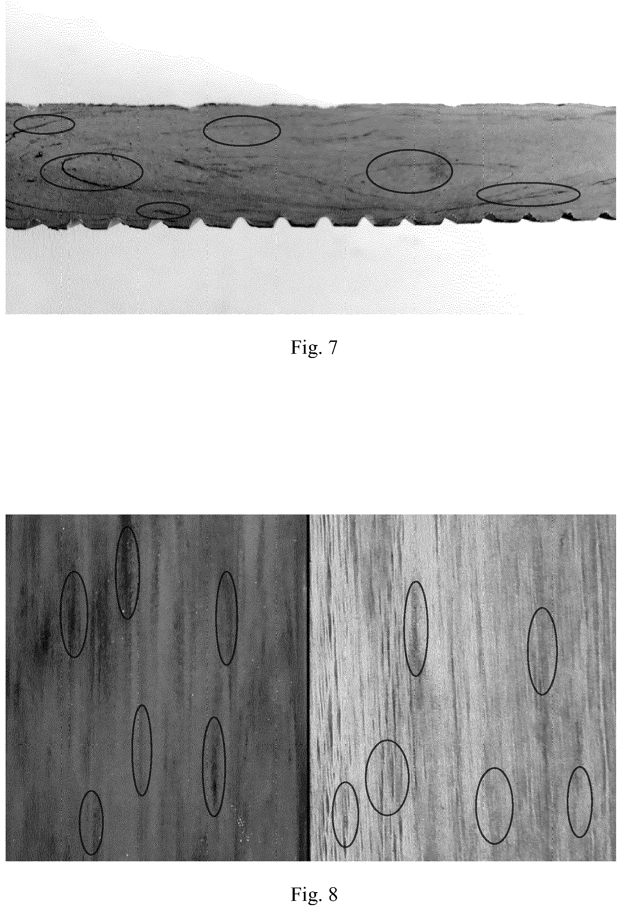

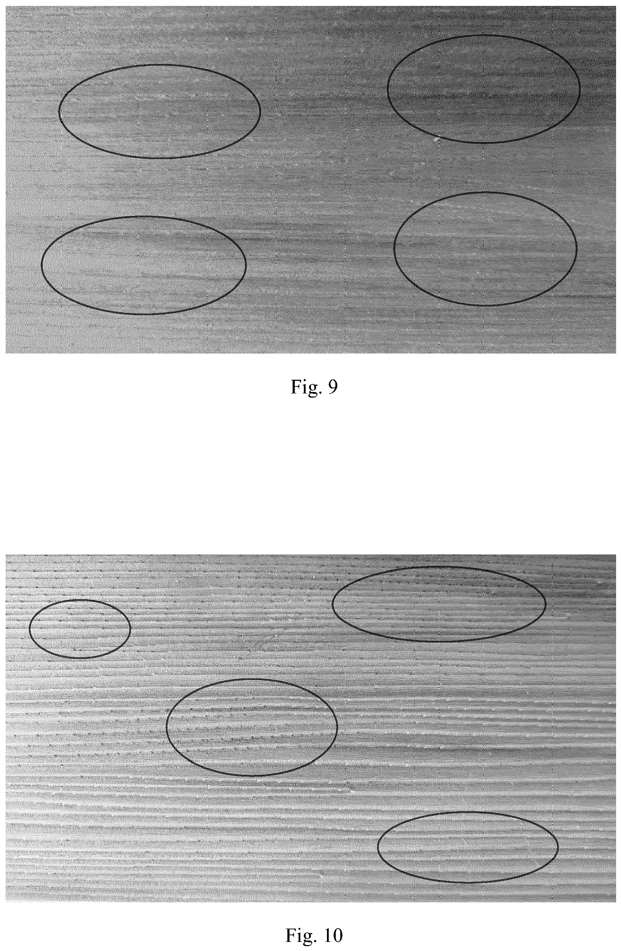

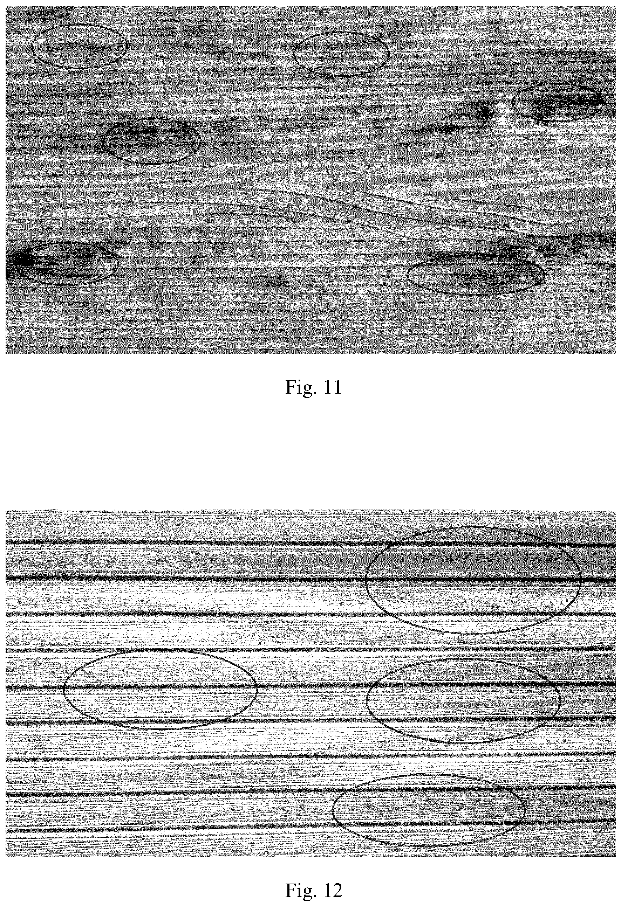

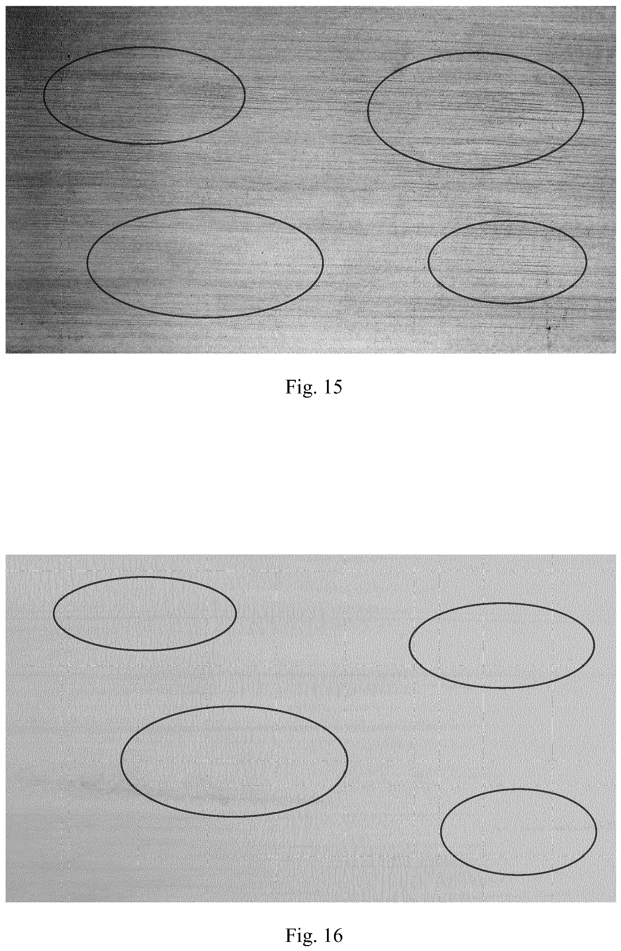

The outer surfaces of each of the prepared wood-plastic molded materials were observed for colors and patterns. Note: the long through streaks, as shown in surface photographs of Fig. 1 (Comparative Example 13), Fig. 2 (comparative Example 14), Fig. 3 (Example 1), Fig. 5 (Example 3), Fig. 10 (Example 7), and Fig. 11 (Example 8) were obtained from subsequent mechanical treatment carried out using a hot-embossing roller. It was found that: Comparative Example 13 (λ= 1.68) exhibited a single original color of white wood-plastic base material, and the pattern shown in the figure was the regular pattern obtained from the subsequent hot-embossing treatment with the hot-embossing roller (see Fig. 1); while Comparative Example 14 (λ=0.20) exhibited a single original color of brown color masterbatch, and the pattern shown in the figure was the regular pattern obtained from the subsequent hot-embossing treatment with the hot-embossing roller (see Fig. 2). To the contrary, in Examples of the present invention, with a decrease in the ratio of modulus of elasticity in tension from 1.47 to 0.26, molten rheological form of the color masterbatch changed in shape from spots to folded lines, to rods, to wide and short streaks, to elongated streaks, and to a diffused state, as shown in Figs. 3 to 16. Figs. 3 to 16 respectively showed surface photographs of the wood-plastic molded materials obtained in Example 1 (λ= 1.47), Example 2 (λ=1.33), Example 3 (λ=0.70), Example 4 (λ=0.63), Example 5 (λ=0.58). Example 6 (λ=0.51), Example 7 (λ=0.44), Example 8 (λ=0.67), Example 9 (λ=0.45), Example 10 (λ=0.26), Example 11 (λ= 0.37 and λ= 0.48), and Example 12 (λ= 0.29). Molten form of the color masterbatch in the base material, appeared in Example 1 as small spots (see Fig. 3, as shown in the ellipses), appeared in Example 2 as a folded line shape (see Fig. 4, as shown in the ellipses), appeared in Example 3 and Example 8 as large spots and as rod-shape respectively (see Fig. 5 and Fig. 11, as shown in the ellipses), appeared in Example 4 and Example 5 as wide and short streaks and elongated streaks respectively (see Fig. 6 and Fig. 8, as shown in the ellipses), and appeared in Example 6, Example 7, Example 9, Example 10, Example 11 and Example 12 in a cloudy shape of being diffused to various degrees (see Fig. 9, Fig. 10, Fig. 12, Fig. 14, Fig. 15 and Fig. 16, as shown in the ellipses). Changes in shapes among spots, folded lines, rod-shape, wide and short streaks, elongated streaks, shape of being diffused refer to color patterns other than light background color and long through streaks obtained from hot mechanical rolling.

Moreover, as shown in Fig. 5, in the wood-plastic molded material obtained in Example 3, white (the base material) and black (the color masterbatch) independently existed separately, and there were only two colors of white and black on the surface of the molded material. As shown in Fig. 8, in the wood-plastic molded material obtained in Example 5, red (the base material) and black (the color masterbatch) were partially fused with each other and appeared a red brown color with varying shades as a compound color thereof. As a result, there were red, black and red brown color with varying shades on surface of the wood-plastic molded material, and therefore, color of the color masterbatch and color of the base material exhibited a compound color effect wherein two or more colors were mixed and changed gradually. Similarly, as shown in Fig. 6, the wood-plastic molded material obtained in Example 4 also exhibited a compound color effect wherein red, black and brown were mixed and changed gradually. This indicated that in the wood-plastic molded material of the present invention, color of the color masterbatch and color of the base material could exhibited a compound color effect wherein two or more colors were mixed and changed gradually because the color masterbatch was present in the base material in various form of being non-fused, partially fused, or completely fused. In actual applications, different combinations of the color masterbatch with the base material can be selected according to a desired pattern so as to achieve an ideal appearance effect.

Fig. 8 is a photograph showing comparisons of the wood-plastic molded material obtained in Example 5 before and after the surface treatment. On the right side is a photograph of the interior face layer of the product after the surface layer on the front side has been scraped off with a sander. In the test, the product still showed different colors and molten rheological form of color masterbatch on any face layer from the front side after several layers had been scraped off.

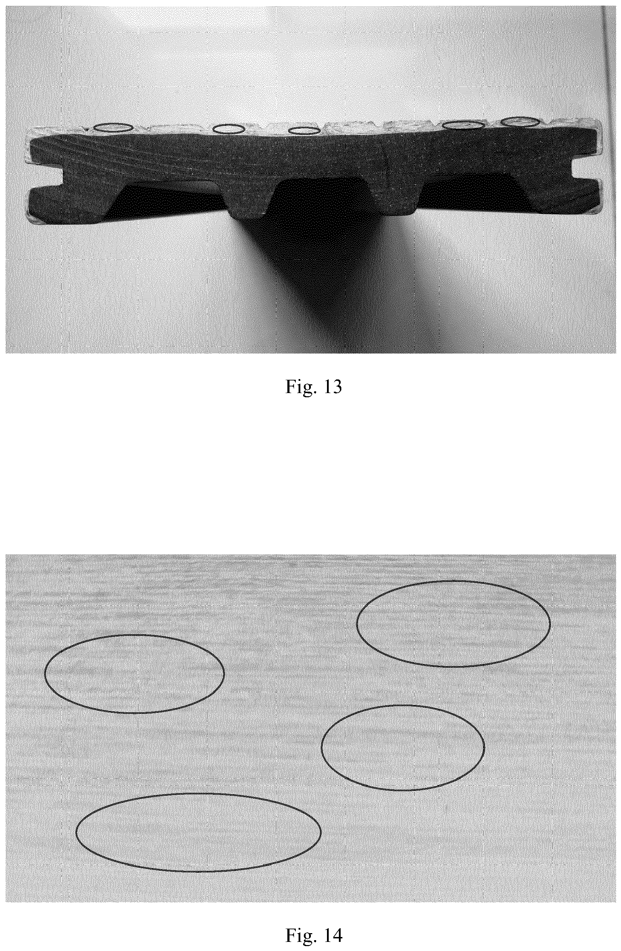

Fig. 7 is a cross-section view of Example 4, and Fig. 13 is a cross-section view of Example 9. It can be seen from these figures that lines or spots having the same color as that of the color masterbatch are present on the cross-section perpendicular to the surface of the wood-plastic molded material. Moreover, as shown by the co-extruded surface layer (white portions) in Fig. 13, melting and rheological behaviors of the materials of the co-extruded surface layer during the production process followed the same mechanism and control method. In addition, the melt extrusion apparatus and temperature used in each of the above Examples were those conventionally used for the manufacture of ordinary non-multi-color wood-plastic molded material. This indicates that the process for producing the multi-color wood-plastic molded material according to the present invention has a good compatibility with the process and apparatus for producing a wood-plastic molded material in the prior art. No high-cost apparatus or die is required to be added, no modification or adjustment on the production apparatus and process is required, and the process is mature and reliable and is easy to be operated. Therefore, production cost is lower. Moreover, production efficiency of extrusion production of a wood-plastic molded material and product quality are ensured with the same temperature and rotation speed of the extruder screw.

### Mechanical performance evaluations

The wood-plastic molded materials obtained in Examples 1-12 were subjected to the falling hammer impact test in accordance with the Section 7.1.2.1 of EN 15534-1: 2014, were subjected to the bending resistance performance test in accordance with EN 15534-1: 2014 Annex A, were subjected to the boiling test in accordance with the Section 8.3.3 of EN 15534-1: 2014, were subjected to the linear thermal expansion coefficient test in accordance with the Section 9.2 of EN 15534-1: 2014, were subjected to the creeping behavior test in accordance with the Section 7.4.1 of EN 15534-1: 2014, and were subjected to the water absorption and swelling test in accordance with the Section 8.3.1 of EN 15534-1: 2014. All of the results were acceptable.

Although the present invention has been described with reference to the specific embodiments, those skilled in the art will understand that various changes may be made and elements thereof may be replaced with equivalents without departing from the scope of the present invention. The present invention is not intended to be limited to the specific embodiments disclosed, but covers all embodiments falling within the scope of the attached claims.

## Claims

1. A multi-color wood-plastic molded material, which is made of a color masterbatch and a base material, wherein a ratio λ of a modulus of elasticity in tension (Et) of the color masterbatch to a modulus of elasticity in tension (Et) of the base material is from 0.26 to 1.47,
the modulus of elasticity in tension of the color masterbatch and the modulus of elasticity in tension of the base material are measured at room temperature in accordance with the standard GB/T 1040.2-2006/ISO 527-2: 1993,
the base material comprises a plastic and a blend of an organic filler and an inorganic filler, the organic filler comprising a fibre material derived from a plant, and
the color masterbatch contains a plastic and a colorant.

2. The multi-color wood-plastic molded material according to claim 1, wherein the modulus of elasticity in tension (Et) of the color masterbatch as measured in accordance with the standard GB/T 1040.2-2006/ISO 527-2: 1993 is within a range of from 0.1 ×10³ MPa to 3×10³ MPa.

3. The multi-color wood-plastic molded material according to claim 1 or 2, wherein the color masterbatch further contains an auxiliary agent selected from the group consisting of a filler, an antioxidant, a light stabilizer, a coupling agent, a lubricant, a dispersant, and a compatibilizer; preferably, the colorant is selected from the group consisting of carbon black, iron oxide red, iron oxide yellow, and titanium dioxide; and preferably, the filler is selected from the group consisting of light calcium carbonate.

4. The multi-color wood-plastic molded material according to any one of claims 1 to 3, wherein the color masterbatch comprises: 30 to 60 parts by weight of polyethylene or polypropylene, 20 to 50 parts by weight of a colorant, 0 to 30 parts by weight of a filler, and 0 to 5 parts by weight of an auxiliary agent selected from the group consisting of an antioxidant, a light stabilizer, a coupling agent, a lubricant, a dispersant and a compatibilizer, based on 100 parts by weight of a total weight of the color masterbatch.

5. The multi-color wood-plastic molded material according to any one of claims 1 to 4, wherein the base material further comprises a colorant and an auxiliary agent selected from the group consisting of an antioxidant, light stabilizer, coupling agent, lubricant, dispersant, compatibilizer, a flame retardant, a mildew inhibitor, and a foaming agent.

6. The multi-color wood-plastic molded material according to any one of claims 1 to 5, wherein the blend of the organic filler and the inorganic filler constitutes 50 wt% or greater of the base material.

7. The multi-color wood-plastic molded material according to any one of claims 1 to 6, wherein with respect to a total weight of the color masterbatch and the base material, a content of the color masterbatch is from 0.1 wt% to 0.5 wt%, and preferably from 0.15 wt% to 0.3 wt%.

8. The multi-color wood-plastic molded material according to any one of claims 1 to 7, wherein in surface and any one of face layers parallel to the surface of the wood-plastic molded material, the color masterbatch is independently present in a rheological form selected from the group consisting of straight line shape, folded line shape, rod shape, strip shape, spot shape, ellipsoid shape, and cloud shape.

9. The multi-color wood-plastic molded material according to any one of claims 1 to 8, wherein two or more colors are present in surface and any one of face layers parallel to the surface of the wood-plastic molded material.

10. The multi-color wood-plastic molded material according to any one of claims 1 to 9, wherein lines or spots having the same color as the color of the color masterbatch are present on a cross-section perpendicular to the surface of the wood-plastic molded material.

11. A process for producing the multi-color wood-plastic molded material according to any one of claims 1 to 10, comprising mixing and melt-extruding the base material and the color masterbatch.

12. The process according to claim 11, further comprising prior to the mixing and melt-extruding of the base material and the color masterbatch:
measuring the modulus of elasticity in tension of the base material; and
based on the measured modulus of elasticity in tension of the base material, selecting a suitable color masterbatch so that a ratio λ of the modulus of elasticity in tension (Et) of the color masterbatch to the modulus of elasticity in tension (Et) of the base material is from 0.26 to 1.47.

13. A wood-plastic composite board, comprising the multi-color wood-plastic molded material as claimed in any one of claims 1 to 10 or the multi-color wood-plastic molded material as produced by the process as claimed in claim 11 or 12.

## Patentansprüche

1. Mehrfarbiges Holz-Kunststoff-Formmaterial, das aus einem Farb-Masterbatch und einem Grundmaterial besteht, wobei ein Verhältnis λ eines Elastizitätsmoduls bei Zugbeanspruchung (Et) des Farb-Masterbatches zu einem Elastizitätsmodul bei Zugbeanspruchung (Et) des Grundmaterials 0,26 bis 1,47 beträgt,
wobei das Elastizitätsmodul bei Zugbeanspruchung des Farb-Masterbatches und das Elastizitätsmodul bei Zugbeanspruchung des Grundmaterials bei Raumtemperatur gemäß der Norm GB/T 1040.2-2006/ISO 527-2: 1993 gemessen werden,
das Grundmaterial einen Kunststoff und eine Mischung aus einem organischen Füllstoff und einem anorganischen Füllstoff umfasst, wobei der organische Füllstoff ein Fasermaterial umfasst, das von einer Pflanze stammt, und
der Farb-Masterbatch einen Kunststoff und einen Farbstoff enthält.

2. Mehrfarbiges Holz-Kunststoff-Formmaterial nach Anspruch 1, wobei das Elastizitätsmodul bei Zugbeanspruchung (Et) des Farb-Masterbatches, wie gemäß der Norm GB/T 1040.2-2006/ISO 527-2: 1993 gemessen, in einem Bereich von 0,1×10³ MPa bis 3×10³ MPa liegt.

3. Mehrfarbiges Holz-Kunststoff-Formmaterial nach Anspruch 1 oder 2, wobei der Farb-Masterbatch ferner einen Hilfsstoff enthält, der ausgewählt ist aus der Gruppe, die besteht aus einem Füllstoff, einem Antioxidationsmittel, einem Lichtstabilisator, einem Haftvermittler, einem Schmiermittel, einem Dispersionsmittel und einem Verträglichkeitsvermittler; der Farbstoff vorzugsweise ausgewählt ist aus der Gruppe, die besteht aus Ruß, Eisenoxidrot, Eisenoxidgelb und Titandioxid; und der Füllstoff vorzugsweise ausgewählt ist aus der Gruppe, die aus leichtem Calciumcarbonat besteht.

4. Mehrfarbiges Holz-Kunststoff-Formmaterial nach einem der Ansprüche 1 bis 3, wobei der Farb-Masterbatch Folgendes umfasst: 30 bis 60 Gewichtsteile Polyethylen oder Polypropylen, 20 bis 50 Gewichtsteile eines Farbstoffs, 0 bis 30 Gewichtsteile eines Füllstoffs und 0 bis 5 Gewichtsteile eines Hilfsstoffs, der ausgewählt ist aus der Gruppe, die besteht aus einem Antioxidationsmittel, einem Lichtstabilisator, einem Haftvermittler, einem Schmiermittel, einem Dispersionsmittel und einem Verträglichkeitsvermittler, bezogen auf 100 Gewichtsteile eines Gesamtgewichts des Farb-Masterbatches.

5. Mehrfarbiges Holz-Kunststoff-Formmaterial nach einem der Ansprüche 1 bis 4, wobei das Grundmaterial ferner einen Farbstoff und einen Hilfsstoff umfasst, der ausgewählt ist aus der Gruppe, die besteht aus einem Antioxidationsmittel, einem Lichtstabilisator, einem Haftvermittler, einem Schmiermittel, einem Dispersionsmittel, einem Verträglichkeitsvermittler, einem Flammschutzmittel, einem schimmelverhütenden Mittel und einem Schaumbildner.

6. Mehrfarbiges Holz-Kunststoff-Formmaterial nach einem der Ansprüche 1 bis 5, wobei die Mischung des organischen Füllstoffs und des anorganischen Füllstoffs 50 Gew.-% oder mehr des Basismaterials ausmacht.

7. Mehrfarbiges Holz-Kunststoff-Formmaterial nach einem der Ansprüche 1 bis 6, wobei, bezogen auf ein Gesamtgewicht des Farb-Masterbatches und des Grundmaterials, ein Gehalt an dem Farb-Masterbatch von 0,1 Gew.-% bis 0,5 Gew.-% und vorzugsweise von 0,15 bis 0,3 Gew.-% beträgt.

8. Mehrfarbiges Holz-Kunststoff-Formmaterial nach einem der Ansprüche 1 bis 7, wobei in der Oberfläche und einer der Seitenschichten parallel zur Oberfläche des Holz-Kunststoff-Formmaterials der Farb-Masterbatch unabhängig in einer rheologischen Form vorhanden ist, die ausgewählt ist aus der Gruppe bestehend aus gerader Linienform, gefalteter Linienform, Stabform, Streifenform, Punktform, Ellipsenform und Wolkenform.

9. Mehrfarbiges Holz-Kunststoff-Formmaterial nach einem der Ansprüche 1 bis 8, wobei zwei oder mehr Farben in der Oberfläche und einer von Seitenschichten parallel zur Oberfläche des Holz-Kunststoff-Formmaterials vorhanden sind.

10. Mehrfarbiges Holz-Kunststoff-Formmaterial nach einem der Ansprüche 1 bis 9, wobei Linien oder Punkte, welche die gleiche Farbe aufweisen wie der Farb-Masterbatch, auf einem Querschnitt senkrecht zur Oberfläche des Holz-Kunststoff-Formmaterials vorhanden sind.

11. Verfahren zur Herstellung eines mehrfarbigen Holz-Kunststoff-Formmaterials nach einem der Ansprüche 1 bis 10, welches das Mischen und die Schmelzextrusion des Grundmaterials und des Farb-Masterbatches umfasst.

12. Verfahren nach Anspruch 11, das ferner vor dem Mischen und der Schmelzextrusion des Grundmaterials und des Farb-Masterbatches Folgendes umfasst:
Messen des Elastizitätsmoduls bei Zugbeanspruchung des Grundmaterials; und
basierend auf dem gemessenen Elastizitätsmodul bei Zugbeanspruchung des Grundmaterials, Auswählen eines geeigneten Farb-Masterbatches, derart dass ein Verhältnis A des Elastizitätsmoduls bei Zugbeanspruchung (Et) des Farb-Masterbatches zum Elastizitätsmodul bei Zugbeanspruchung (Et) des Grundmaterials 0,26 bis 1,47 beträgt.

13. Holz-Kunststoff-Verbundplatte, die ein mehrfarbiges Holz-Kunststoff-Formmaterial nach einem der Ansprüche 1 bis 10 oder das nach dem Verfahren nach Anspruch 11 oder 12 hergestellte mehrfarbige Holz-Kunststoff-Formmaterial umfasst.

## Revendications

1. Matériau moulé en bois-matière plastique multicolore, qui est fait d'un mélange maître coloré et d'un matériau de base, dans lequel le rapport λ du module d'élasticité en tension (Et) du mélange maître coloré au module d'élasticité en tension (Et) du matériau de base est de 0,26 à 1,47,
le module d'élasticité en tension du mélange maître coloré et le module d'élasticité en tension du matériau de base sont mesurés à la température ambiante conformément à la norme GB/T 1040.2-2006/ISO 527-2:1993,
le matériau de base comprend une matière plastique et un mélange d'une charge organique et d'une charge inorganique, la charge organique comprenant un matériau fibreux d'origine végétale, et
le mélange maître coloré contient une matière plastique et un colorant.

2. Matériau moulé en bois-matière plastique multicolore selon la revendication 1, dans lequel le module d'élasticité en tension (Et) du mélange maître coloré, tel que mesuré conformément à la norme GB/T 1040.2-2006/ISO 527-2:1993, est situé dans la plage allant de 0,1 × 10³ MPa à 3 × 10³ MPa.

3. Matériau moulé en bois-matière plastique multicolore selon la revendication 1 ou 2, dans lequel le mélange maître coloré contient en outre un agent auxiliaire choisi dans le groupe constitué par une charge, un antioxydant, un stabilisant à la lumière, un agent de couplage, un lubrifiant, un dispersant, et un agent de compatibilité ; de préférence le colorant est choisi dans le groupe constitué par le noir de carbone, l'oxyde de fer rouge, l'oxyde de fer jaune, et le dioxyde de titane ; de préférence la charge est choisie dans le groupe constitué par le carbonate de calcium léger.

4. Matériau moulé en bois-matière plastique multicolore selon l'une quelconque des revendications 1 à 3, dans lequel le mélange maître coloré comprend : 30 à 60 parties en poids de polyéthylène ou de polypropylène, 20 à 50 parties en poids d'un colorant, 0 à 30 parties en poids d'une charge, et 0 à 5 parties en poids d'un agent auxiliaire choisi dans le groupe constitué par un antioxydant, un stabilisant à la lumière, un agent de couplage, un lubrifiant, un dispersant, et un agent de compatibilité, pour 100 parties en poids du poids total du mélange maître coloré.

5. Matériau moulé en bois-matière plastique multicolore selon l'une quelconque des revendications 1 à 4, dans lequel le matériau de base comprend en outre un colorant et un agent auxiliaire choisi dans le groupe constitué par un antioxydant, un stabilisant à la lumière, un agent de couplage, un lubrifiant, un dispersant, un agent de compatibilité, un agent ignifugeant, un agent anticryptogamique, et un agent moussant.

6. Matériau moulé en bois-matière plastique multicolore selon l'une quelconque des revendications 1 à 5, dans lequel le mélange de la charge organique et de la charge inorganique constitue 50 % en poids ou plus du matériau de base.

7. Matériau moulé en bois-matière plastique multicolore selon l'une quelconque des revendications 1 à 6, dans lequel, par rapport au poids total du mélange maître coloré et du matériau de base, la teneur en le mélange maître coloré est de 0,1 % en poids à 0,5 % en poids, et de préférence de 0,15 % en poids à 0,3 % en poids.

8. Matériau moulé en bois-matière plastique multicolore selon l'une quelconque des revendications 1 à 7, dans lequel, dans la surface et l'une quelconque des couches de face parallèles à la surface du matériau moulé en bois-matière plastique, le mélange maître coloré est indépendamment présent sous une forme rhéologique choisie dans le groupe constitué par une forme de ligne droite, une forme de ligne pliée, une forme de bâtonnet, une forme de bande, une forme de point, une forme ellipsoïdale, et une forme de nuage.

9. Matériau moulé en bois-matière plastique multicolore selon l'une quelconque des revendications 1 à 8, dans lequel deux ou plus de deux couleurs sont présentes dans la surface et l'une quelconque des couches de face parallèles à la surface du matériau moulé en bois-matière plastique.

10. Matériau moulé en bois-matière plastique multicolore selon l'une quelconque des revendications 1 à 9, dans lequel des lignes ou points ayant une couleur identique à la couleur du mélange maître coloré sont présents sur une section transversale perpendiculaire à la surface du matériau moulé en bois-matière plastique.

11. Procédé pour produire le matériau moulé en bois-matière plastique multicolore selon l'une quelconque des revendications 1 à 10, comprenant le mélange et l'extrusion à l'état fondu du matériau de base et du mélange maître coloré.

12. Procédé selon la revendication 11, comprenant en outre, avant le mélange et l'extrusion à l'état fondu du matériau de base et du mélange maître :
la mesure du module d'élasticité en tension du matériau de base ; et
sur la base du module d'électricité en tension du matériau de base mesuré, la sélection d'un mélange maître coloré convenable de façon que le rapport λ du module d'élasticité en tension (Et) du mélange maître coloré au module d'élasticité en tension (Et) du matériau de base soit de 0,26 à 1,47.

13. Panneau composite en bois-matière plastique, comprenant le matériau moulé en bois-matière plastique multicolore selon l'une quelconque des revendications 1 à 10 ou le matériau moulé en bois-matière plastique multicolore tel que produit par le procédé selon la revendication 11 ou 12.
